# EUROPÄISCHE PATENTSCHRIFT

(11) **EP 1 397 542 B1**
(45) Veröffentlichungstag und Bekanntmachung des Hinweises auf die Patenterteilung: **12.03.2008**
(21) Anmeldenummer: 02729756.3
(22) Anmeldetag: 18.06.2002
(51) Int. Cl.: D03D 1/00

(54) **VERFAHREN UND ANLAGE ZUR HERSTELLUNG VON GEMUSTERTEN TEXTILEN ETIKETTEN**
METHOD AND INSTALLATION FOR PRODUCING PATTERNED TEXTILE LABELS
PROCEDE ET INSTALLATION DE FABRICATION D'ETIQUETTES TEXTILES A DESSINS

(30) Priorität: 22.06.2001 CH 11452001
(43) Veröffentlichungstag der Anmeldung: 17.03.2004
(73) Patentinhaber: Brevitex Etablissement pour l'exploitation de brevets textiles, 9490 Vaduz (LI)
(72) Erfinder: SPEICH, Francisco, CH-5073 Gipf-Oberfrick (CH)
(74) Vertreter: Schmauder, Klaus Dieter
(86) Internationale Anmeldenummer: PCT/CH2002/000330
(87) Internationale Veröffentlichungsnummer: WO 2003/000974

(56) Entgegenhaltungen:
- EP-A- 1 085 114
- WO-A-00/73559
- DE-A- 3 627 315
- DE-C- 4 341 532

## Beschreibung

### Technisches Gebiet

Die Erfindung betrifft ein Verfahren zur Herstellung von gemusterten textilen Etiketten gemäss Oberbegriff des Anspruches 1 sowie eine Anlage zur Durchführung des Verfahrens gemäss Anspruch 28.

### Stand der Technik

Ein Verfahren und eine Anlage der eingangs genannten Art sind beispielsweise aus der DE 36 27 315 A, der EP 1 085 114 oder der WO 00/73 559 bekannt. Die dort hergestellten Etiketten weisen neben einem regulären Muster individuelle Musterteile auf, für die in einem bestimmten Bereich Plätze reserviert (Platzhalter) werden, welche mit Grundpattern bestimmter Auslegung versehen sind. In diese Platzbereiche werden Pattem-Musterteile, also fertige Patternteile automatisch aus einem elektronischem Speicher eingesetzt. Diese Musterteile können variabel sein. Die fertigen Patternteile besitzen bereits alle Informationen für die Steuerung der Herstellungsmaschine beispielsweise einer Jacquardwebmaschine.

Es ist jedoch relativ schwierig, bei einer fortlaufenden Herstellung der Etiketten jedes Etikett mit einem eindeutig anderen individuellen Musterteil zu versehen. Jedenfalls sind die Plätze, wo variable Daten eingesetzt werden können fixiert und limitiert. Erschwerend kommt hinzu, dass die Musterteile vorgefertig sein müssen, sodass eine Änderung beispielsweise der Breite, Länge oder eines anderen Parameters nicht einfach möglich ist. Es muss von Grund auf neu konzipiert werden, was mit grossen Kosten verbunden ist. Ferner müssen die Übergänge von einem Musterteil auf einen anderen bindungstechnisch exakt aufeinander abgestimmt sein, was schwer zu realisieren ist. Ausserdem besteht keine Sicherheit dagegen, dass ein individueller Musterteil fälschlicherweise mehrfach vergeben wird.

### Darstellung der Erfindung

Aufgabe der Erfindung ist es, ein Verfahren und eine Anlage der eingangs genannten Art derart zu verbessern, dass fortlaufend Etiketten mit voneinander individuell verschiedenen Musterteilen einfach und sicher hergestellt werden können.

Die Aufgabe wird erfindungsgemäss gelöst:
a) bei dem eingangs genannten Verfahren durch die kennzeichnenden Merkmale des Anspruches 1;
b) bei der eingangs genannten Anlage durch die kennzeichnenden Merkmale des Anspruches 28.

Dadurch, dass man ein virtuelles Etikett aus N über die Breite und die Länge des virtuellen Etiketts verteilte einzelne Etiketten mit einem Muster und N von Etikett zu Etikett verschiedenen individuellen Musterteilen herstellt und das so hergestellte virtuelle Etikett in N einzelne Etiketten unterteilt, wird sichergestellt, dass die bei der Losgrösse N hergestellten einzelnen Etiketten auch tatsächlich voneinander verschieden sind.

Vorteilhafte Ausgestaltungen des Verfahrens sind in den Ansprüchen 2 bis 27 und bezüglich der Anlage in den Ansprüchen 29 bis 35 beschrieben.

Gemäss Anspruch 2 entspricht die Breite des virtuellen Etiketts der Anzahl der in einer Herstellungsmaschine, beispielsweise einer Webmaschine eingesetzten Kettfäden.

N kann eine beliebige Grösse haben. Vorzugsweise verwendet man aber gemäss Anspruch 3 eine Länge, die der Länge einer auf einem Wickelbaum aufwickelbaren Warenbahn entspricht. Die Losgrösse N kann nach Anspruch 4 auch von der in einer Verpackungseinheit verpackbaren Etiketten abhängen.

Die Etiketten können nach Anspruch 5 jeweils mindestens mit einem zweiten Musterteil versehen werden, der nach Anspruch 6 eine fortlaufende Nummerierung sein kann, die vorzugsweise in Längsrichtung des virtuellen Etiketts fortlaufend auf nebeneinander liegende Reihen verteilt sein kann. Die individuellen Musterteile können nach Anspruch 7 auch Barcode oder nach Anspruch 8 fälschungssichere Zusatzcode sein, die von einem Zufallsgenerator erzeugbar sind. Gemäss Anspruch 9 können Musterteile auch verschiedene graphische Figuren wie Bilder, Logs oder dergleichen sein. Auch andere individuelle Musterteile sind denkbar, wie verschiedene Vor- und/oder Familiennamen. Der individuelle Musterteil kann auch aus einer Serie von Gegenständen, Pflanzen, Tieren oder dergleichen bestehen.

Nach Anspruch 10 ist das virtuelle Etikett am Anfang und am Ende mit kennzeichnenden Informationen versehen, um beispielsweise eine Losgrösse zu kennzeichnen oder zu beschriften. Nach Anspruch 11 sieht man im virtuellen Etikett V in Längsrichtung und/oder in Breitenrichtung zwischen den einzelnen Etiketten musterfreie Zwischenzonen zum Unterteilen des virtuellen Etiketts in einzelne Etiketten oder Etikettenbahnen vor. Diese können nach Anspruch 12 durch einen musterfreien Grundgewebeteil gebildet sein. Nach Anspruch 13 kann man die Zwischenzonen in Längsrichtung auch durch gewebefreie Zonen bilden, indem man das virtuelle Etikett in auf die Breite verteilten Längsbändem herstellt.

Gemäss Anspruch 14 erstellt man das virtuelle Etikett zunächst im Designmodus und wandelt es erst dann mittels eines Umformers in einen durch die Herstellungsmaschine verarbeitbaren Patternmodus um. Diese individuellen Musterteile können gemäss Anspruch 15 manuell, gemäss Anspruch 16 halbautomatisch und gemäss Anspruch 17 vollautomatisch erzeugt werden. Insbesondere im letzteren Falle ist es vom Vorteil, wenn man für den Designmodus eine Rechner gesteuerte Mustereinrichtung mit einem CAD-System mit Design-Software und mit mindestens einem Generator zur Erzeugung der individuellen Musterteile verwendet.

Die Mustereinrichtung kann nach Anspruch 19 unabhängig von der Herstellungsmaschine anordnet sein und der Datentransfer kann mittels Datenleitung oder vorzugsweise mittels Datenträger zu Herstellungsmaschine erfolgen. Dabei kann die Mustereinrichtung vorzugsweise sogar unabhängig von dem Benützer der Herstellungsmaschine vorteilhafter Weise beim Hersteller solcher Herstellungsmaschinen angeordnet sein. Der die Herstellungsmaschine Betreibende kann dann das gewünschte Muster und die gewünschten individuellen Musterteile als Vorlage an den Betreiber der Mustereinrichtung senden, der dann das notwendige Steuerprogramm, das sogenannte Masterprogramm, mit den Steuersignalen für die Herstellungsmaschine erstellt und an den Auftraggeber zur Steuerung der Herstellungsmaschine zurückgibt.

Die Herstellungsmaschine kann gemäss Anspruch 20 eine Druckmaschine sein, auf der eine Textilbahn mit dem virtuellen Etikett bedruckt wird. Wesentlich vorteilhafter ist die Verwendung einer Jacquard-Webmaschine gemäss Anspruch 21 zur Herstellung des virtuellen Etiketts. Das virtuelle Etikett kann gemäss Anspruch 23 mit einer Webkante auf einer mehrgängigen Jacquard-Nadelbandwebmaschine ohne Gewebebreiten-Rapportwiederholung gewebt werden. Höhere Leistungen lassen sich mit einem Verfahren nach Anspruch 22 erzielen, wenn das virtuelle Etikett auf einer Jacquard-Breitwebmaschine ohne Gewebebreiten-Rapportwiederholung hergestellt wird.

Das virtuelle Etikett kann nun auf einer solchen Herstellungsmaschine als Band- oder breite Bahn fortlaufend hergestellt werden und gemäss Anspruch 26 unabhängig von der Herstellungsmaschine in einzelne Etiketten unterteilt und allenfalls in einer Faltmaschine noch auf die endgültige Form gefaltet werden. Gemäss den Ansprüchen 24 und/oder 25 ist es aber auch möglich, das virtuelle Etikett im Zuge der Herstellung auf der Herstellungsmaschine in Längs- und/oder Breitenrichtung zu zerschneiden.

Es ist vorteilhaft, wenn man das virtuelle Etikett auf einer Herstellungsmaschine herstellt, die gemäss Anspruch 27 einen Produktionszähler aufweist, um die Anzahl der hergestellten Etiketten für die verschiedensten Anwendungszwecke zu erfassen wie: Kontrolle der hergestellten Losgrösse für einen Abnehmer der Etiketten und/oder zur Lizenzabrechnung für den Maschinen- und/oder Softwarehersteller.

### Kurze Beschreibung der Zeichnungen

Ausführungsbeispiele der Erfindung werden nachfolgend anhand der Zeichnungen näher beschrieben, dabei zeigen:
- Figur 1: ein einzelnes Etikett im Grundriss;
- Figur 2: die schematische Darstellung einer Jacquard-Breitwebmaschine teilweise in schaubildlicher Darstellung und teilweise im Blockschaltbild;
- Figur 3: ein weiteres einzelnes Etikett im Grundriss;
- Figur 4: ein virtuelles Etikett aus den einzelnen Etiketten der Figur 3; und
- Figur 5: die schematische Darstellung einer dreigängigen Nadelbandwebmaschine.

### Wege zur Ausführung der Erfindung

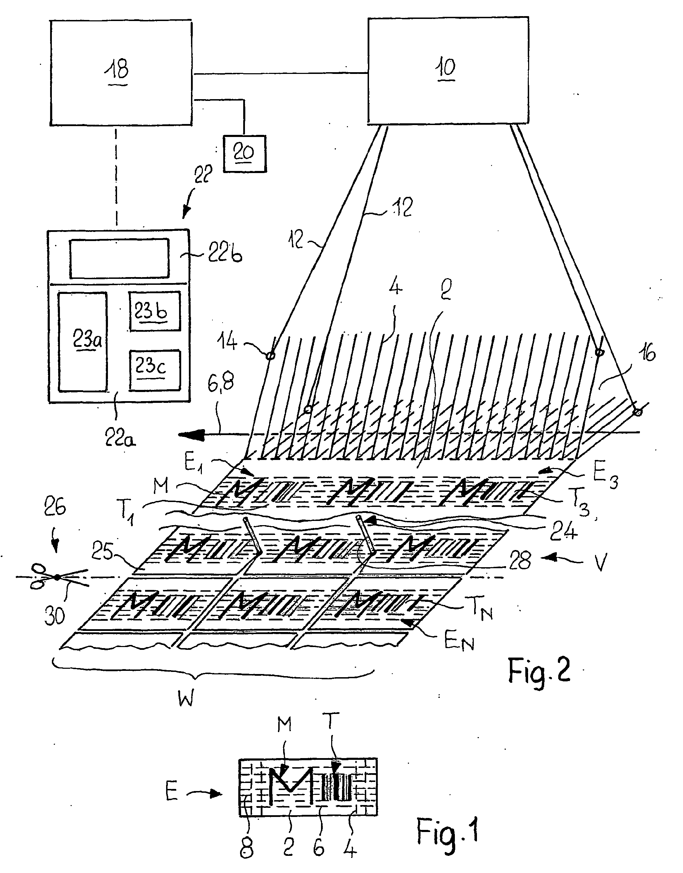

Die Figur 1 zeigt ein Etikett E aus einem Grundgewebe 2, welches aus Grundkettfäden 4 und Grundschussfäden 6 hergestellt ist. Figurschussfäden 8 dienen zur Erzeugung eines Musters M sowie individueller Musterteile T, wobei letztere von Etikett zu Etikett voneinander verschieden sind.

Die Figur 2 zeigt das Schema einer bevorzugten als Jacquard-Breitwebmaschine ausgebildeten Herstellungsmaschine mit einer Jacquardvorrichtung 10, die über Litzen 12 und Litzenösen 14 die Kettfäden 4 zu einem Webfach 16 öffnet, in das einerseits die Grundschussfäden 6 und andererseits Figurschussfäden 8 eingetragen und zum Grundgewebe 2 sowie den Mustern M und den Musterteilen T abgebunden werden.

Die Jacquard-Breitwebmaschine enthält eine Steuervorrichtung 18, die allenfalls einen Produktionszähler 20 aufweist. Die Steuervorrichtung 18 wird gespeist von einer Mustereinrichtung 22, die entweder mit der Steuervorrichtung direkt verbunden sein kann oder von der Jacquard-Breitwebmaschine getrennt, beispielsweise in einem Mustercenter angeordnet sein kann. In letzterem Falle können die Daten der Mustereinrichtung 22 über einen Datenträger, beispielsweise eine Diskette, oder über eine Datenleitung, zum Beispiel ein CAM-Netzwerk, übermittelt werden.

Die Mustereinrichtung 22 enthält einen Designteil 22a mit einer CAD-Anlage 23a, in der ein gewünschtes Muster erstellt wird, ferner erste Steuermittel 23b und gegebenenfalls weitere Steuermittel 23c, die beispielsweise Generatoren sind, um ein oder mehrere individuelle Musterteile T zu erstellen. Ferner umfasst die Mustervorrichtung einen Umformer 22b (Patternvorrichtung), welcher das im Designteil 22a erstellte virtuelle Etikett V in eine maschinenlesbare Form überführt, die von der Steuervorrichtung 18 der Herstellungsmaschine 10, im vorliegenden Beispiel der Jacquardvorrichtung der Webmaschine verarbeite werden kann. Die Steuermittel 23b,23c können von Hand betätigte Einrichtungen, halbautomatische Einrichtungen oder vollautomatische Einrichtungen sein, wobei insbesondere letztere eine entsprechende Software enthalten.

Aufgrund des in der Mustereinrichtung 22 erzeugten Steuerprogrammes, des sogenannten Masterprogrammes kann die Jacquard-Breitwebmaschine gesteuert werden und die in Figur 2 angedeutete Warenbahn W erzeugen. In dieser Warenbahn werden nebeneinander liegende einzelne Etiketten E₁ bis E₃ gewebt, die jeweils ein gemeinsames Muster M und voneinander individuelle Musterteile T₁ bis T₃ aufweisen. In Kettrichtung reihen sich solche einzelne Reihen der Etiketten aneinander. Ein durch das Masterprogramm gegebenes virtuelles Etikett V entsteht, welches N einzelne Etiketten E enthält, die jeweils das gleiche Muster M jedoch N voneinander verschiedene Musterteile T₁ bis T_{N} aufweisen. Die Etiketten sind in Breitenrichtung durch Zwischenzonen 25 getrennt, die aus musterfreiem Grundgewebe bestehen. Das so hergestellte virtuelle Etikett V kann mit einer ersten Trennvorrichtung 24 in Längsrichtung in einzelne Bänder unterteilt werden, die dann mittels einer zweiten Trennvorrichtung 26 längs der Zwischenzone 25 in einzelne Etiketten E zerschnitten werden. Im gezeigten Beispiel besteht die erste Trennvorrichtung 24 aus thermischen Schneidelementen 28, die beispielsweise aus einem Heizdraht oder einer Ultrasonic-Vorrichtung bestehen können. Die zweite Trennvorrichtung 26 kann analog der ersten Trennvorrichtung 24 ausgebildet sein. Im gezeigten Beispiel ist durch die Schere 30 angedeutet, dass die zweite Trennvorrichtung 26 mechanisch arbeitet.

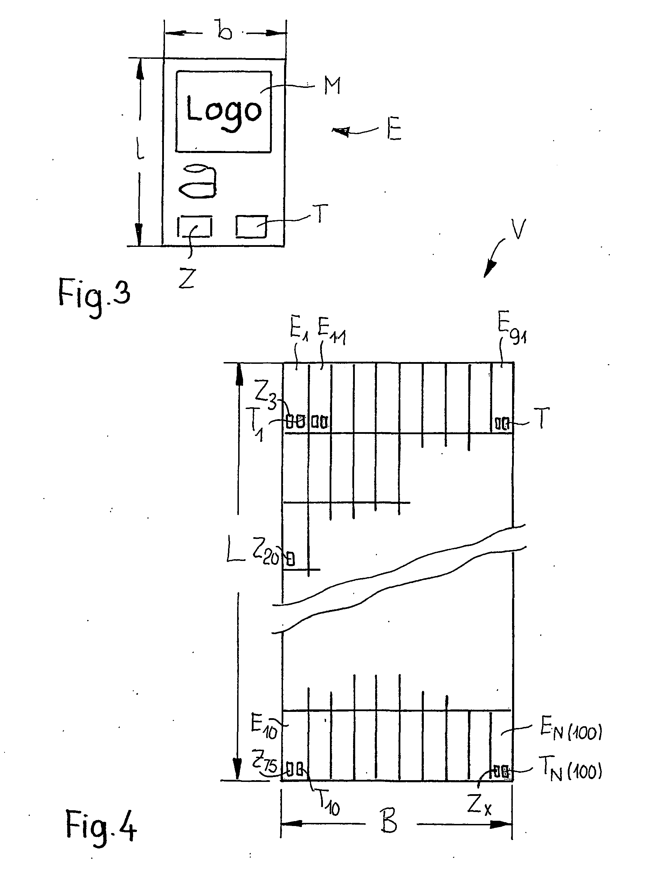

Die Figuren 3 und 4 zeigen ein weiteres Etikett E mit einem Muster M und einem ersten Musterteil T und einem zweiten Musterteil Z, das eine Länge I von beispielsweise 70 mm und einer Breite b von beispielsweise 30 mm aufweist. Das Steuerprogramm ist nun beispielsweise so ausgebildet, dass 10 Etiketten E₁ bis E₁₀ in einer Längsreihe in Längsrichtung der Warenbahn W verteilt angeordnet sind und sich in der Breite weitere Reihen mit fortlaufender Nummerierung E₁₁ bis E₂₀, E₂₁ bis E₃₀, und so weiter bis E_{N} anschliessen und so ein virtuelles Etikett V bilden, welches eine Länge L und eine Breite B aufweist. Die Breite B des virtuellen Etiketts V entspricht einer Rapportbreite der Jacquard-Webmaschine. Hat ein Etikett eine Länge von I = 70 mm und eine Breite b = 30 mm und werden 10 Reihen nebeneinander angeordnet, so ergibt sich bei einer Losgrösse von N = 50'000 ein virtuelles Etikett mit der Länge L = 350 m und der Breite B = 0,3 m. Die Länge L des virtuellen Etiketts V wird zweckmässiger Weise höchstens so gross wie die Länge der auf einem Warenbaum aufwickelbaren Warenbahn gewählt. Die Reihen der Etiketten können jeweils zu einer Rolle aufgewickelt werden, bei der die Etiketten eine fortlaufende Nummerierung tragen.

Der zweite Musterteil Z des Etiketts der Figuren 3 und 4 enthält eine codierte Zusatzinformation (Z), die am Steuermittel 23c der Mustereinrichtung 22 der Figur 23c erzeugbar ist. Diese Steuermittel 23c enthalten einen Zufallsgenerator der jedem Etikett E₁ bis E_{N} neben der fortlaufenden Nummer T₁ bis T_{N} ein codiertes Zeichen Zₓ zuordnet, wie dies in Figur 4 angedeutet ist, um einem mit einem solchen Etikett versehenen Produkt beispielsweise einen Kopierschutz, Diebstahlsicherheit oder dergleichen zu verleihen.

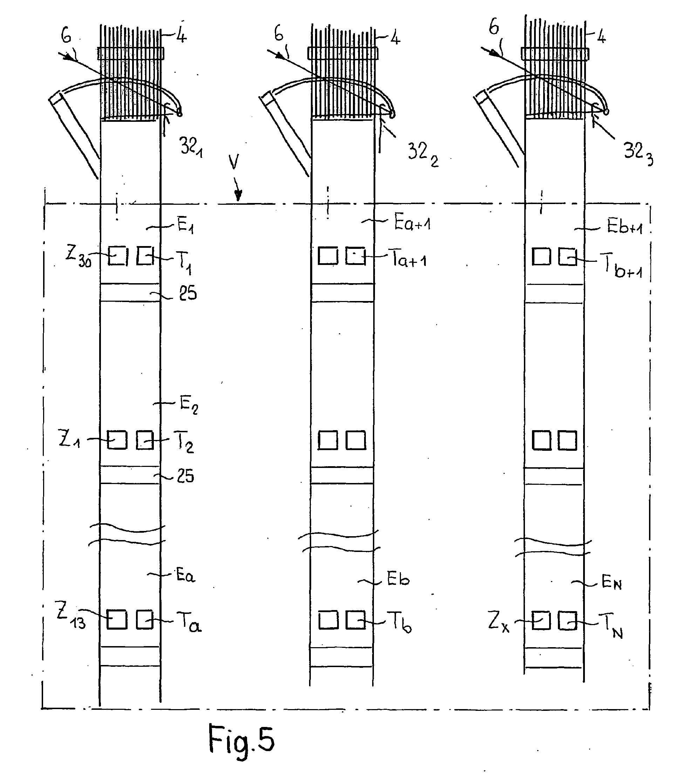

In Figur 5 ist ein weiteres individuelles Etikett V dargestellt, das auf einer dreigängigen Nadelbandwebmaschinen hergestellt wird. Die einzelnen Etiketten werden dabei auf die einzelnen Webstellen 32 _{1,} 32 _{2,} 32 ₃ v erteilt. So werden die Etiketten E ₁ bis E ₐ an der ersten Webstelle 32 ₁, die Etiketten E ₐ₊₁ bis E _{b} an der Webstelle 32 ₂ und die restlichen Etiketten E _{b+1} bis E _{N} an der dritten Webstelle 32 ₃ erzeugt, wobei jeweils materiell nicht miteinander verbundene Bänder entstehen, die nur durch aufeinander abgestimmte Nummerierung und Anordnung der Musterteile T ₁ bis T _{N} inhaltlich miteinander verbunden sind. Die Etiketten weisen überdies einen zusätzlichen kodierten Musterteil Z _{X} auf.

Nach dem vorliegenden Verfahren und mit der vorliegenden Anlage kann beispielsweise ein Kunde im Tif-Format die Graphik seines Etiketts mit Angabe der Lage des Musterteils, beispielsweise einer Nummerierung, an ein Mustercenter senden. Dieses Mustercenter erstellt für die Anordnung und Form des Musterteiles und für die Ausbildung und Anordnung des individuellen Musterteiles ein Masterprogramm, welches dann beispielsweise in Form einer programmierten Diskette an den Kunden beispielsweise den Weber zurückgesandt wird, um es in einer Jacquard-Webmaschine abzuarbeiten.

### Bezugszeichenliste

- E: Etikett
- M: Muster
- T: Musterteil
- V: virtuelles Etikett
- W: Warenbahn
- Z: Musterteil (Zusatz)
- L: Länge des virtuellen Etiketts
- B: Breite des virtuellen Etiketts
- I: Länge des Etiketts
- b: Breite des Etiketts

- 2: Grundgewebe
- 4: Grundkettfaden
- 6: Grundschussfaden
- 8: Figurschussfaden
- 10: Jacquardvorrichtung
- 12: Litze
- 14: Litzenöse
- 16: Webfach
- 18: Steuervorrichtung
- 20: Produktionszähler
- 22: Mustereinrichtung
- 22a: Designteil
- 22b: Umformer (Patternvorrichtung)
- 23a: CAD-Vorrichtung
- 23b: Steuermittel
- 23c: Steuermittel
- 24: erste Trennvorrichtung
- 25: Zwischenzone
- 26: zweite Trennvorrichtung
- 28: thermisches Schneidelement
- 30: Schere
- 32: Webstelle

## Patentansprüche

1. Verfahren zur Herstellung von gemusterten textilen Etiketten, wobei die Etiketten (E₁ bis E_{N}) mittels einer durch eine Mustereinrichtung (22) gesteuerten Herstellungsmaschine mit einem für alle Etiketten gleichen Muster (M) sowie mit voneinander verschiedenen Musterteilen (T₁ bis T_{N},Z ₁ bis Z_{N}) versehen werden, **dadurch gekennzeichnet, dass** man ein virtuelles Etikett (V) aus N einzelnen Etiketten (E₁ bis E_{N}) herstellt, die über die Breite (B) und die Länge (L) des virtuellen Etiketts (V) verteilt sind und N voneinander verschiedene individuelle Musterteile (T₁ bis T_{N}, Z ₁ bis Z_{N}) aufweisen und man das so hergestellt virtuelle Etikett (V) in einzelne Etiketten (E₁ bis E_{N}) unterteilt.

2. Verfahren nach Anspruch 1, **dadurch gekennzeichnet, dass** die Breite der Anzahl der pro Herstellungsmaschine eingesetzten Kettfäden (4) entspricht.

3. Verfahren nach Anspruch 1 oder 2, **dadurch gekennzeichnet, dass** man die Länge (L) des virtuellen Etiketts (V) entsprechend der auf einem Wickelbaum der Herstellungsmaschine aufwickelbaren Warenbahn (W) wählt.

4. Verfahren nach einem der Ansprüche 1 bis 3, **dadurch gekennzeichnet, dass** man die Anzahl N der Etiketten (E) des virtuellen Etiketts (V) entsprechend der Anzahl der in einer Verpackungseinheit verpackbaren Etiketten wählt.

5. Verfahren nach einem der Ansprüche 1 bis 4, **dadurch gekennzeichnet, dass** man die Etiketten (E₁ bis E_{N}) jeweils mit mindestens einem zweiten Musterteil (Z₁ bis Z_{N}) versieht, der von Etikett zu Etikett verschieden ist.

6. Verfahren nach Anspruch 5, **dadurch gekennzeichnet, dass** man für mindestens einen individuellen Musterteile (T₁ bis T_{N}, Z₁ bis Z_{N}) eine fortlaufende Nummerierung wählt, die vorzugsweise in Längsrichtung des virtuellen Etiketts (V) fortlaufend auf nebeneinander liegende Reihen verteilt ist.

7. Verfahren nach Anspruch 5, **dadurch gekennzeichnet, dass** man für mindestens einen individuellen Musterteile (T₁ bis T_{N}, Z₁ bis Z_{N}) von Etikett zu Etikett verschiedene Barcode wählt.

8. Verfahren nach Anspruch 5, **dadurch gekennzeichnet, dass** man für einen individuellen Musterteile (Z₁ bis Z_{N}) von Etikett zu Etikett verschiedene fälschungssichere Zusatzcode wählt, die vorzugsweise mit enem Zufallsgenerator erzeugt werden.

9. Verfahren nach Anspruch 5, **dadurch gekennzeichnet, dass** man für einen individuellen Musterteile (T₁ bis T_{N}, Z₁ bis Z_{N}) von Etikett zu Etikett verschiedene graphische Figuren wie Bilder, Logos oder dergleichen wählt.

10. Verfahren nach einem der Ansprüche 1 bis 9, **dadurch gekennzeichnet, dass** man das virtuelle Etikett (V) am Anfang und am Ende mit kennzeichnenden Informationen versieht.

11. Verfahren nach einem der Ansprüche 1 bis 10, **dadurch gekennzeichnet, dass** man im virtuellen Etikett (V) in Längsrichtung und/oder in Breitenrichtung zwischen den einzelnen Etiketten musterfreie Zwischenzonen (25) zum Unterteilen des virtuellen Etiketts in einzelne Etiketten oder Etikettenbahnen anordnet.

12. Verfahren nach Anspruch 11, **dadurch gekennzeichnet, dass** man die Zwischenzonen durch einen musterfreien Grundgewebeteil bildet.

13. Verfahren nach Anspruch 11, **dadurch gekennzeichnet, dass** man die Zwischenzonen in Längsrichtung durch gewebefreie Zonen bildet, indem man des virtuelle Etikett in auf die Breite verteilten Längsbändern herstellt.

14. Verfahren nach einem der Ansprüche 1 bis 13, **dadurch gekennzeichnet, dass** man das virtuelle Etikett (V) zunächst im Designmodus erstellt und dann mittels eines Umformers (22b) in einen durch die Herstellungsmaschine verarbeitbaren Patternmodus umwandelt.

15. Verfahren nach Anspruch 14, **dadurch gekennzeichnet, dass** man die individuellen Musterteile (T₁ bis T_{N}, Z₁ bis Z_{N}) im Designmodus manuell erzeugt.

16. Verfahren nach Anspruch 14, **dadurch gekennzeichnet, dass** man die individuellen Musterteile (T₁ bis T_{N}, Z₁ bis Z_{N}) im Designmodus halbautomatisch erzeugt.

17. Verfahren nach Anspruch 14, **dadurch gekennzeichnet, dass** man die individuellen Musterteile (T₁ bis T_{N}, Z₁ bis Z_{N}) im Designmodus vollautomatisch erzeugt.

18. Verfahren nach einem der Ansprüche 14 bis 17, **dadurch gekennzeichnet, dass** man für den Designmodus eine Rechner gesteuerte Mustereinrichtung (22) mit einem CAD-System (23a) mit Design-Software und mit mindestens einem Steuermittel (23b,23c) zur Erzeugung der individuellen Musterteile (T₁ bis T_{N}, Z₁ bis Z_{N}) verwendet.

19. Verfahren nach einem der Ansprüche 1 bis 18, **dadurch gekennzeichnet, dass** man die Mustereinrichtung (22) unabhängig von der Herstellungsmaschine anordnet und den Datentransfer mittels Datenleitung oder vorzugsweise mittels Datenträger zu Herstellungsmaschine durchführt.

20. Verfahren nach einem der Ansprüche 1 bis 19, **dadurch gekennzeichnet, dass** man als Herstellungsmaschine eine Druckmaschine verwendet.

21. Verfahren nach einem der Ansprüche 1 bis 19, **dadurch gekennzeichnet, dass** man als Herstellungsmaschine eine Jacquard-Webmaschine verwendet.

22. Verfahren nach Anspruch 21, **dadurch gekennzeichnet, dass** man das virtuelle Etikett (V) auf einer Jacquard-Breitwebmaschine ohne Gewebebreiten-Rapportwiederholung webt.

23. Verfahren nach Anspruch 21, **dadurch gekennzeichnet, dass** man das virtuelle Etikett (V) auf einer mehrgängigen Jacquard-Nadelbandwebmaschine ohne Gewebebreiten-Rapportwiederholung herstellt.

24. Verfahren nach einem der Ansprüche 1 bis 22, **dadurch gekennzeichnet, dass** man das virtuelle Etikett (V) mindestens in Längsrichtung auf der Herstellungsmaschine, vorzugsweise durch thermisches Schneiden, unterteilt.

25. Verfahren nach einem der Ansprüche 1 bis 24, **dadurch gekennzeichnet, dass** man das virtuelle Etikett (V) in Breitenrichtung auf der Herstellungsmaschine, vorzugsweise durch thermisches Schneiden, unterteilt.

26. Verfahren nach einem der Ansprüche 1 bis 25, **dadurch gekennzeichnet, dass** man das Unterteilen des virtuellen Etiketts (V) unabhängig von der Herstellungsmaschine durchführt.

27. Verfahren nach einem der Ansprüche 1 bis 26, **dadurch gekennzeichnet, dass** man das virtuelle Etikett (V) auf einer Herstellungsmaschine herstellt, die einen Produktionszähler (20) für die einzelnen Etiketten aufweist, der vorzugsweise mit einer Vorgabe für die Anzahl der herzustellenden Etiketten ladbar ist.

28. Anlage zur Durchführung des Verfahrens nach einem der Ansprüche 1 bis 27 mit einer Mustereinrichtung (22) und einer Herstellungsmaschine, **dadurch gekennzeichnet, dass** die Mustereinrichtung (22) Steuermittel zur Erzeugung eines virtuellen Etiketts (V) aufweist, welches N über die Breite (B) und die Länge (L) des virtuellen Etiketts verteilte einzelne Etikette (E₁ bis E_{N}) mit N voneinander verschiedenen individuellen Musterteilen (T₁ bis T_{N} ,Z ₁ bis Z_{N}) aufweist.

29. Anlage nach Anspruch 28, **dadurch gekennzeichnet, dass** die Mustereinrichtung (22) unabhängig von der Herstellungsmaschine angeordnet ist.

30. Anlage nach Anspruch 29, **dadurch gekennzeichnet, dass** die Mustereinrichtung (22) Ausgabemittel zur Erzeugung eines Datenträgers für den Datenaustausch mit der Herstellungsmaschine aufweist.

31. Anlage nach einem der Ansprüche 28 bis 30, **dadurch gekennzeichnet, dass** die Herstellungsmaschine einen Produktionszähler (20) zur Erfassung der Anzahl der hergestellten individuellen oder einzelnen Etiketten aufweist.

32. Anlage nach einem der Ansprüche 28 bis 31, **dadurch gekennzeichnet, dass** die Herstellungsmaschine eine Druckmaschine ist.

33. Anlage nach einem der Ansprüche 28 bis 31, **dadurch gekennzeichnet, dass** die Herstellungsmaschine eine Jacquard-Webmaschine ist.

34. Anlage nach Anspruch 33, **dadurch gekennzeichnet, dass** die Jacquard-Webmaschine eine Breitwebmaschine ist.

35. Anlage nach Anspruch 33, **dadurch gekennzeichnet, dass** die Jacquard-Webmaschine eine mehrgängige Nadelbandwebmaschine ist.

## Claims

1. A method for producing patterned textile labels, the labels (E₁ to E_{N}) being provided with a pattern (M) identical for all the labels and with pattern parts (T₁ to T_{N}, Z₁ to Z_{N}) different from one another by means of a production machine controlled by a pattern device (22), **characterized in that** a virtual label (V) consisting of N individual labels (E₁ to E_{N}) is produced, said individual labels being distributed over the width (B) and the length (L) of the virtual label (V) and having N individual pattern parts (T₁ to T_{N}, Z₁ to Z_{N}) that differ from one another, and virtual label (V) thus produced is subdivided into individual labels (E₁ to E_{N}).

2. The method as claimed in claim 1, **characterized in that** the width corresponds to a number of warp threads (4) used for a production machine.

3. The method as claimed in claim 1 or 2, **characterized in that** the length (L) of the virtual label (V) is selected according to the cloth web (W) which is capable of being wound on a winding beam of a production machine.

4. The method as claimed in one of claims 1 to 3, **characterized in that** the number N of labels (E) of the virtual label (V) is selected according to the number of labels capable of being packaged in a packaging unit.

5. The method as claimed in one of claims 1 to 4, **characterized in that** the labels (E₁ to E_{N}) are provided in each case with at least one second pattern part (Z₁ to Z_{N}) which is different from label to label.

6. The method as claimed in claim 5, **characterized in that** a continuous numbering is selected for at least one individual pattern part (T₁ to T_{N}, Z₁ to Z_{N}) and is distributed continuously, preferably in the longitudinal direction of the virtual label (V), in rows lying next to one another.

7. The method as claimed in claim 5, **characterized in that** bar codes different from label to label are selected for at least one individual pattern part (T₁ to T_{N}, Z₁ to Z_{N}).

8. The method as claimed in claim 5, **characterized in that** counterfeit-proof additional codes which are different from label to label and are preferably generated by means of a random generator are selected for an individual pattern part (Z₁ to Z_{N}).

9. The method as claimed in claim 5, **characterized in that** graphic figures, such as images, logos or the like, which are different from label to label are selected for an individual pattern part (T₁ to T_{N}, Z₁ to Z_{N}).

10. The method as claimed in one of claims 1 to 9, **characterized in that** the virtual label (V) is provided at the start and at the end with identifying information.

11. The method as claimed in one of claims 1 to 10, **characterized in that** pattern-free intermediate zones (25) for subdividing the virtual label into individual labels or label webs are arranged in the virtual label (V) between the individual labels in the longitudinal direction and/or in the width direction.

12. The method as claimed in claim 11, **characterized in that** the intermediate zones are formed by a pattern-free ground fabric part.

13. The method as claimed in claim 11, **characterized in that** the intermediate zones are formed in the longitudinal direction by fabric-free zones, **in that** the virtual label is produced in longitudinal strips distributed over the width.

14. The method as claimed in one of claims 1 to 13, **characterized in that** the virtual label (V) is first prepared in the design mode and is then converted by means of a converter (22b) into a pattern mode capable of being processed by the production machine.

15. The method as claimed in claim 14, **characterized in that** the individual pattern parts (T₁ to T_{N}, Z₁ to Z_{N}) are generated manually in the design mode.

16. The method as claimed in claim 14, **characterized in that** the individual pattern parts (T₁ to T_{N}, Z₁ to Z_{N}) are generated semiautomatically in the design mode.

17. The method as claimed in claim 14, **characterized in that** the individual pattern parts (T₁ to T_{N}, Z₁ to Z_{N}) are generated fully automatically in the design mode.

18. The method as claimed in one of claims 14 to 17, **characterized in that** a computer-controlled pattern device (22) with a CAD system (23a) having design software and with at least one control means (23b, 23c) for generating the individual pattern parts (T₁ to T_{N}, Z₁ to Z_{N}) is used for the design mode.

19. The method as claimed in one of claims 1 to 18, **characterized in that** the pattern device (22) is arranged independently of the production machine and carries out the data transfer to the production machine by means of a data line or preferably by means of a data carrier.

20. The method as claimed in one of claims 1 to 19, **characterized in that** the production machine used is a printing machine.

21. The method as claimed in one of claims 1 to 19, **characterized in that** the production machine used is a Jacquard weaving machine.

22. The method as claimed in claim 21, **characterized in that** the virtual label (V) is woven on a Jacquard broad-weaving machine without fabric-width repeat repetition.

23. The method as claimed in claim 21, **characterized in that** the virtual label (V) is produced on a multi-section Jacquard needle ribbon weaving machine without fabric-width repeat repetition.

24. The method as claimed in one of claims 1 to 22, **characterized in that** the virtual label (V) is subdivided at least in the longitudinal direction on the production machine, preferably by thermal cutting.

25. The method as claimed in one of claims 1 to 24, **characterized in that** the virtual label (V) is subdivided in the width direction on the production machine, preferably by thermal cutting.

26. The method as claimed in one of claims 1 to 25, **characterized in that** the subdivision of the virtual label (V) is carried out independently of the production machine.

27. The method as claimed in one of claims 1 to 26, **characterized in that** the virtual label (V) is produced on the production machine which has a production counter (20) for the individual labels which is preferably capable of being loaded with an instruction for the number of labels to be produced.

28. An installation for carrying out the method as claimed in one of claims 1 to 27, with a pattern device (22) and with a production machine, **characterized in that** the pattern device (22) has control means for generating a virtual label (V) which has N individual labels (E₁ to E_{N}) distributed over the width (B) and the length (L) of the virtual label and having N individual pattern parts (T₁ to T_{N}, Z₁ to Z_{N}) different from one another.

29. The installation as claimed in claim 28, **characterized in that** the pattern device (22) is arranged independently of the production machine.

30. The installation as claimed in claim 29, **characterized in that** the pattern device (22) has output means for generating a data carrier for data exchange with the production machine.

31. The installation as claimed in one of claims 28 to 30, **characterized in that** the production machine has a production counter (20) for detecting the number of individual or single labels produced.

32. The installation as claimed in one of claims 28 to 31, **characterized in that** the production machine is a printing machine.

33. The installation as claimed in one of claims 28 to 31, **characterized in that** the production machine is a Jacquard weaving machine.

34. The installation as claimed in claim 33, **characterized in that** the Jacquard weaving machine is a broad-weaving machine.

35. The installation as claimed in claim 33, **characterized in that** the Jacquard weaving machine is a multi-section needle ribbon weaving machine.

## Revendications

1. Procédé de fabrication d'étiquettes textiles à dessin, selon lequel à l'aide d'une machine de fabrication commandée par une installation de dessin (22) on munit les étiquettes (E₁-E_{N}) d'un dessin (M) identique pour toutes les étiquettes et de parties de dessin (T₁-T_{N},Z₁-Z_{N}) différentes d'une étiquette à l'autre,
**caractérisé en ce qu'**
on fabrique une étiquette virtuelle (V) composée de N étiquettes individuelles (E₁-E_{N}) réparties sur la largeur (B) et la longueur (L) de l'étiquette virtuelle (V) et ayant N parties de dessin individuelles, différentes (T₁-T_{N}, Z₁-Z_{N}), et on subdivise l'étiquette virtuelle (V) ainsi fabriquée en étiquettes individuelles (E₁-E_{N}).

2. Procédé selon la revendication 1,
**caractérisé en ce que**
la largeur correspond au nombre de fils de chaîne (4) utilisés par machine de fabrication.

3. Procédé selon la revendication 1 ou 2,
**caractérisé en ce qu'**
on choisit la longueur (L) de l'étiquette virtuelle (V) en fonction de la nappe de matière (W) qui peut être enroulée sur l'ensouple de la machine de fabrication.

4. Procédé selon l'une des revendications 1 à 3,
**caractérisé en ce qu'**
on choisit le nombre N d'étiquettes (E) formant l'étiquette virtuelle (V) en fonction du nombre d'étiquettes qui peuvent être emballées dans une unité d'emballage.

5. Procédé selon l'une des revendications 1 à 4,
**caractérisé en ce qu'**
on munit les étiquettes (E₁-E_{N}) chaque fois d'au moins une seconde partie de dessin (Z₁-Z_{N}) différente d'une étiquette à l'autre.

6. Procédé selon la revendication 5,
**caractérisé en ce que**
pour au moins une partie des dessins individuels (T₁-T_{N}, Z₁-Z_{N}), on choisit une numérotation suivie, répartie de préférence dans la direction longitudinale de l'étiquette virtuelle (V), de façon continue, et suivant des rangées juxtaposées.

7. Procédé selon la revendication 5,
**caractérisé en ce qu'**
on choisit pour au moins une partie des dessins, individuels (T₁-T_{N}, Z₁-Z_{N}), des codes barres différents d'une étiquette à l'autre.

8. Procédé selon la revendication 5,
**caractérisé en ce qu'**
on choisit pour une partie des dessins, individuels (Z₁-Z_{N}), des codes complémentaires de sécurité contre les copies, codes différents d'une étiquette à l'autre, ces codes étant générés de préférence par un générateur aléatoire.

9. Procédé selon la revendication 5,
**caractérisé en ce que**
pour une partie des dessins, individuels (T₁-T_{N}, Z₁-Z_{N}), d'une étiquette à l'autre, on choisit des figures graphiques différentes telles que des images, des logos ou analogues.

10. Procédé selon l'une des revendications 1 à 9,
**caractérisé en ce qu'**
on munit d'informations caractéristiques le début et la fin de l'étiquette virtuelle.

11. Procédé selon l'une des revendications 1 à 10,
**caractérisé en ce que**
dans l'étiquette virtuelle (V), dans la direction longitudinale et/ou dans la direction transversale, entre les différentes étiquettes on prévoit des zones intermédiaires (25) sans dessin pour subdiviser l'étiquette virtuelle en étiquettes séparées ou en bandes d'étiquettes.

12. Procédé selon la revendication 11,
**caractérisé en ce qu'**
on forme les zones intermédiaires par une partie de tissu de base sans dessin.

13. Procédé selon la revendication 11,
**caractérisé en ce qu'**
on forme les zones intermédiaires dans la direction longitudinale par des zones non tissées **en ce qu'**on fabrique l'étiquette virtuelle par des bandes longitudinales réparties en largeur.

14. Procédé selon l'une des revendications 1 à 13,
**caractérisé en ce qu'**
on établit tout d'abord l'étiquette virtuelle (V) en mode de conception puis à l'aide d'un convertisseur (22b) on la convertit en un mode de motif que peut traiter la machine de fabrication.

15. Procédé selon la revendication 14,
**caractérisé en ce qu'**
on génère manuellement les parties des dessins individuels (T₁-T_{N}, Z₁-Z_{N}) en mode de conception.

16. Procédé selon la revendication 14,
**caractérisé en ce qu'**
on génère les parties des dessins individuels (T₁-T_{N}, Z₁-Z_{N}) de façon semi-automatique en mode conception.

17. Procédé selon la revendication 14,
**caractérisé en ce qu'**
on réalise les parties des dessins individuels (T₁-T_{N}, Z₁-Z_{N}) de manière totalement automatique en mode conception.

18. Procédé selon l'une des revendications 14 à 17,
**caractérisé en ce que**
pour le mode de conception on utilise une installation de dessin (22) commandée par un calculateur avec un système CAD (23a) avec un programme de conception et au moins un moyen de commande (23b, 23c) pour générer les parties des dessins individuels (T₁-T_{N}, Z₁-Z_{N}).

19. Procédé selon l'une des revendications 1 à 18,
**caractérisé en ce que**
l'installation de motif (22) est indépendante de la machine de fabrication et effectue le transfert de données par une ligne de transmission de données ou de préférence par un support de données à la machine de fabrication.

20. Procédé selon l'une des revendications 1 à 19,
**caractérisé en ce que**
comme machine de fabrication on utilise une machine d'impression.

21. Procédé selon l'une des revendications 1 à 19,
**caractérisé en ce que**
comme machine de fabrication on utilise un métier Jacquard.

22. Procédé selon la revendication 21,
**caractérisé en ce qu'**
on tisse l'étiquette virtuelle (V) sur un métier Jacquard large sans répéter le rapport de tissage en largeur.

23. Procédé selon la revendication 21,
**caractérisé en ce qu'**
on fabrique l'étiquette virtuelle (V) sur un métier à tisser Jacquard à banc d'aiguilles à plusieurs rangées sans répétition du rapport de largeur de tissage.

24. Procédé selon l'une des revendications 1 à 22,
**caractérisé en ce qu'**
on divise l'étiquette virtuelle (V) au moins dans la direction longitudinale sur la machine de fabrication, de préférence par une coupe thermique.

25. Procédé selon l'une des revendications 1 à 24,
**caractérisé en ce qu'**
on divise l'étiquette virtuelle (V) dans le sens de la largeur sur la machine de fabrication, de préférence par une coupe thermique.

26. Procédé selon l'une des revendications 1 à 25,
**caractérisé en ce qu'**
on effectue la division de l'étiquette virtuelle (V), indépendamment de la machine de fabrication.

27. Procédé selon l'une des revendications 1 à 26,
**caractérisé en ce qu'**
on réalise l'étiquette virtuelle (V) sur une machine de fabrication qui comporte un compteur de produits (20) pour les différentes étiquettes qui se charge de préférence avec une consigne correspondant au nombre d'étiquettes à fabriquer.

28. Installation pour la mise en oeuvre du procédé selon l'une des revendications 1 à 27, comportant une installation de dessin (22) et une machine de fabrication,
**caractérisée en ce que**
l'installation de dessin (22) comporte des moyens de commande pour générer une étiquette virtuelle (V) qui comporte N étiquettes (E₁-E_{N}), réparties sur la largeur (B) et la longueur (L) de l'étiquette virtuelle, avec N parties de dessins individuels différentes (T₁-T_{N}, Z₁-Z_{N}).

29. Installation selon la revendication 28,
**caractérisée en ce que**
l'installation de dessin (22) est indépendante de la machine de fabrication.

30. Installation selon la revendication 29,
**caractérisée en ce que**
l'installation de dessin (22) comporte des moyens d'émission pour générer un support de données pour l'échange de données avec la machine de fabrication.

31. Installation selon l'une des revendications 28 à 30,
**caractérisée en ce que**
la machine de fabrication comporte un compteur de produits (20) pour saisir le nombre d'étiquettes individuelles fabriquées ou d'étiquettes séparées.

32. Installation selon l'une des revendications 28 à 31,
**caractérisée en ce que**
la machine de fabrication est une machine d'impression.

33. Installation selon l'une des revendications 28 à 31,
**caractérisée en ce que**
la machine de fabrication est un métier Jacquard.

34. Installation selon la revendication 33,
**caractérisée en ce que**
le métier Jacquard est un métier large.

35. Installation selon la revendication 33,
**caractérisée en ce que**
le métier Jacquard est un métier à banc d'aiguilles à plusieurs rangées.
